# EUROPEAN PATENT SPECIFICATION

(11) **EP 4 494 449 B1**
(45) Date of publication and mention of the grant of the patent: **03.06.2026**
(21) Application number: 23185755.8
(22) Date of filing: 17.07.2023
(51) Int. Cl.: A01F 12/44, A01F 12/48, F16C 23/06, F16D 3/12, F16C 19/54

(54) **CLEANING FAN FOR COMBINE HARVESTER**
REINIGUNGSGEBLÄSE FÜR MÄHDRESCHER
VENTILATEUR DE NETTOYAGE POUR MOISSONNEUSE-BATTEUSE

(43) Date of publication of application: 22.01.2025
(73) Proprietor: CNH Industrial Belgium N.V., 8210 Zedelgem (BE); CNH Industrial America LLC, New Holland, PA 17557 (US)
(72) Inventor: Vanderstichele, Michiel, 8210 Zedelgem (BE); Staelens, Gunther, 8210 Zedelgem (BE); Hillen, Curtis, New Holland, 17557 (US); Bolin, Micah, New Holland, 17557 (US)
(74) Representative: CNH Industrial IP Department

(56) References cited:
- CN-A- 111 247 970
- CN-U- 215 530 039
- DE-C2- 19 517 929
- FR-A- 556 619
- US-A1- 2005 020 331

## Description

### FIELD OF THE INVENTION

The disclosure relates to a cleaning fan of a combine harvester.

### BACKGROUND OF THE INVENTION

Combines are used to harvest crops. Operations performed by these combines include threshing and separating grain from materials other than grain (MOG). The separating system includes perforated pans configured such that grain falls through the perforated pans into a cleaning system to be collected, and MOG is blocked from entering the cleaning system. A cleaning fan is employed in the cleaning system in order to remove the MOG. The goal is to blow the MOG out of the cleaning system and into a residue handling system. The cleaning fan is driven by a motor. Precise alignment between the driveshaft of the fan and the output shaft of the motor is important in the interest of maximizing the lifespan of the fan and the motor. Thus, it would be desirable to compensate for any angular misalignments between the driveshaft of the fan and the output shaft of the motor. CN 215 530 039 U discloses a kind of mounting of a hydraulic fan motor and a cleaning fan on a combine harvester. This mounting also seeks to avoid missalignment between the driveshaft and the output shaft.

### SUMMARY OF THE INVENTION

According to one aspect of the invention, a combine harvester comprises a chassis (12) and a cleaning fan assembly (52) that is connected to the chassis. The cleaning fan assembly (52) includes: (a) a first housing (200) that is fixedly mounted to the chassis (12) or other point on the combine harvester, the first housing defining a first hub (230), (b) a second housing (202) that is mounted to the first housing (200), the second housing (202) defining a second hub (232), the second hub (232) being circumferentially surrounded by the first hub (230), (c) a fan motor (210) that is fixedly mounted to the second housing (202), the fan motor (210) including a rotatable output shaft (214), (d) a driveshaft (208) that is non-rotatably mounted to the rotatable output shaft (214) for rotating along with the output shaft (214), (e) a first bearing (216) arranged between the second hub (232) and the driveshaft (208) for guiding rotation of the driveshaft (208) relative to the second hub (232), and (f) a second bearing (220) arranged between the first hub (230) and the second hub (232), wherein the second bearing (220) is configured to compensate for angular misalignment between the first hub (230) and the second hub (232).

According to another aspect, the first and second hubs (230, 232) overlap each other in an axial direction.

According to another aspect, the angular misalignment is relative to a longitudinal axis (224) of drive shaft (208).

According to another aspect, the second bearing (220) is one of a spherical roller bearing, a self-aligning ball bearing, spherical plain bearing, a bushing, a rubber bushing and an angular contact bearing.

According to another aspect, the first bearing (216) is not configured to compensate for angular misalignment between the first hub (230) and the second hub (232).

According to another aspect, the first bearing (216) is a ball bearing.

According to another aspect, one end of driveshaft (208) is non-rotatably connected to the output shaft (214) and an opposing end of driveshaft (208) is non-rotatably connected to an impeller of the cleaning fan assembly (52).

According to another aspect, the impeller of the cleaning fan assembly (52) is configured to deliver air along a flow path (112) that is perpendicular to a longitudinal axis of driveshaft (208).

According to another aspect, a sieve (46, 48, 50) is positioned in said flow path (112).

According to another aspect, the first housing (200) further comprises a first flange that is connected to a mating flange of the second housing (202) by a fastener (203) and flexible bushing (235).

According to another aspect, the first housing (200) further comprises a second flange that is connected to chassis (12) by a fastener (201).

According to another aspect, the second housing (202) further comprises a flange that is connected to a mating flange of the fan motor (210) by a fastener.

According to another aspect, the first and second bearings (216, 220) overlap each other in an axial direction.

According to another aspect, the second bearing (220) circumferentially surrounds the first bearing (216).

According to another aspect, the first and second bearings (216, 220), the first and second hubs (230, 232) and the output shaft (214) all overlap each other in an axial direction.

### BRIEF DESCRIPTION OF THE DRAWINGS

FIG. 1 is a side view of a combine, which is shown schematically, according to an embodiment of the disclosure.
FIG. 2 is an isometric view of a partial assembly of a cleaning fan of the combine of FIG. 1.
FIG. 3 is a cross-sectional view of the partial assembly of the cleaning fan of FIG. 2 taken along the lines 3-3.

### DETAILED DESCRIPTION OF THE INVENTION

The terms "grain" and "residue" are used principally throughout the specification for convenience but it is to be understood that these terms are not intended to be limiting. Thus "grain" refers to that part of the crop material which is threshed and separated from the discardable part of the crop material, which is referred to as non-grain crop material, material other than grain (MOG) that is generally discharged from the combine as "residue."

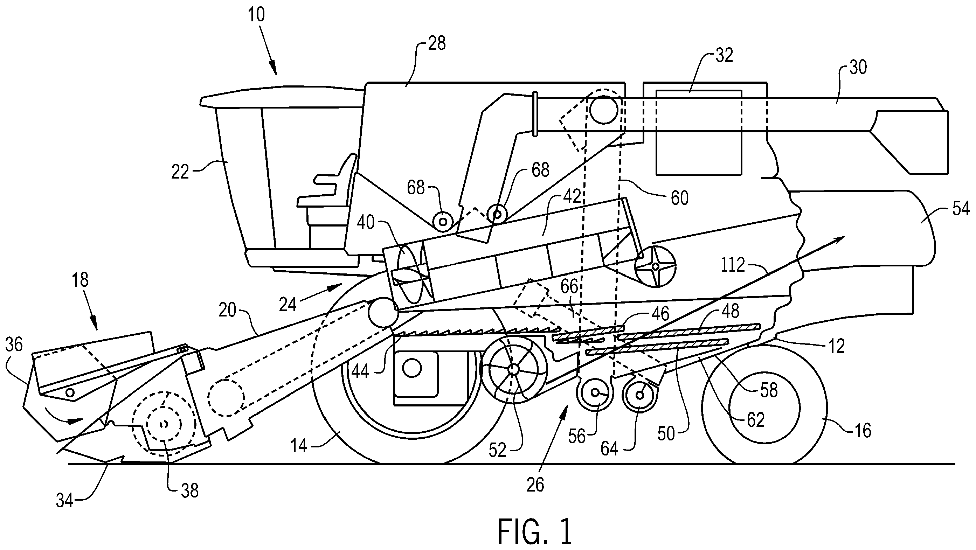

Referring now to the drawings, and more particularly to FIG. 1, there is shown an embodiment of an agricultural harvester in the form of a combine 10, which generally includes a chassis 12, ground engaging wheels 14 and 16, a header 18, a feeder housing 20, an operator cab 22, a threshing and separating system 24, a cleaning system 26, a grain tank 28, and an unloading auger 30.

Motive force is selectively applied to front wheels 14 through a power plant in the form of a diesel engine 32 and a transmission (not shown). Although combine 10 is shown as including wheels, is also to be understood that combine 10 may include tracks, such as full tracks or half-tracks.

Header 18 is mounted to the front of combine 10 and includes a cutter bar 34 for severing crops from a field during forward motion of combine 10. Header 18 may be removable from the combine such that headers designed for particular crops are interchangeable. In one example, a rotatable reel 36 feeds the crop into header 18, and a double auger 38 feeds the severed crop laterally inwardly from each side toward feeder housing 20. Feeder housing 20 conveys the cut crop to threshing and separating system 24, and is selectively vertically movable using appropriate actuators, such as hydraulic cylinders (not shown).

Threshing and separating system 24 generally includes an axially oriented rotor 40 at least partially enclosed by and rotatable within a corresponding perforated concave 42. The cut crops are threshed and separated by the rotation of rotor 40 within concave 42, and larger MOG elements, such as stalks, leaves and the like are discharged from the rear of combine 10. Smaller elements of crop material including grain and small MOG, including particles lighter than grain, such as chaff, dust and straw, are discharged through perforations of concave 42.

Grain which has been separated by the threshing and separating assembly 24 falls onto a grain pan 44 and is conveyed toward cleaning system 26. Cleaning system 26 may include an optional pre-cleaning sieve 46, an upper sieve 48 (also known as a chaffer sieve), a lower sieve 50 (also known as a cleaning sieve), and a cleaning fan 52. Grain on sieves 46, 48 and 50 is subjected to a cleaning action by fan 52 which provides an airflow 112 (see bold arrow) through the sieves to remove chaff and other impurities such as dust from the grain by making this material airborne along path 112 for discharge from straw hood 54 of combine 10. Grain pan 44 and pre-cleaning sieve 46 oscillate in a fore-to-aft manner to transport the grain and finer non-grain crop material to the upper surface of upper sieve 48. Upper sieve 48 and lower sieve 50 are vertically arranged relative to each other, and likewise oscillate in a fore-to-aft manner to spread the grain across sieves 48, 50, while permitting the passage of cleaned grain by gravity through the openings of sieves 48, 50.

Clean grain falls to a clean grain auger 56 positioned crosswise below and in front of lower sieve 50. Clean grain auger 56 receives clean grain from each sieve 48, 50 and from bottom pan 58 of cleaning system 26. Clean grain auger 56 conveys the clean grain laterally to a generally vertically arranged grain elevator 60 for transport to grain tank 28. Some MOG from cleaning system 26 fall to a tailings auger trough 62. The MOG is transported via tailings auger 64 and return auger 66 to the upstream end of cleaning system 26 for repeated cleaning action. A pair of grain tank augers 68 at the bottom of grain tank 28 convey the clean grain laterally within grain tank 28 to unloading auger 30 for discharge from combine 10. The MOG proceeds through a residue handling system 70, as is known in the art.

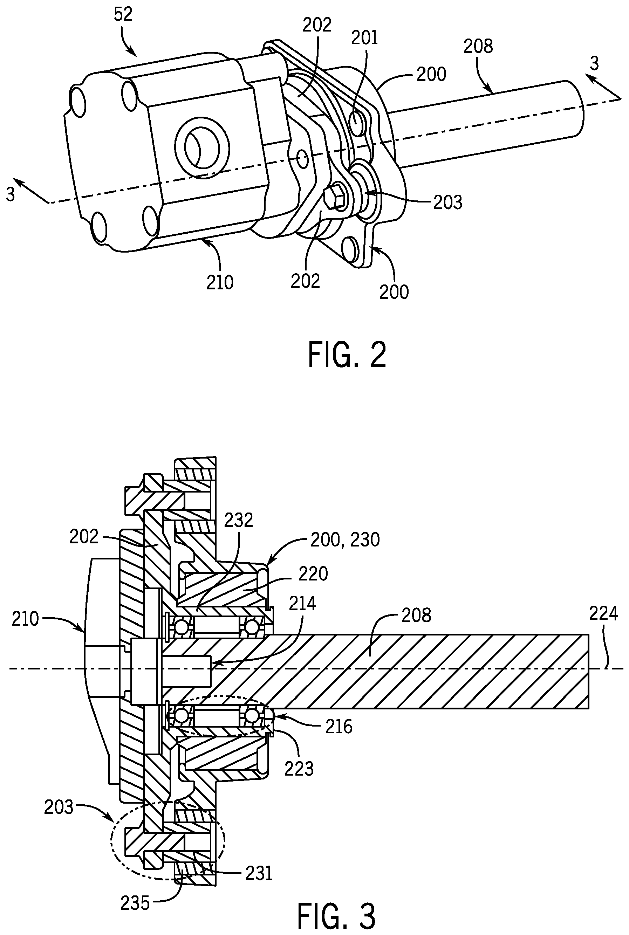

Turning now to FIGs. 2 and 3, those figures depict a partial assembly of cleaning fan 52 of cleaning system 26. Cleaning fan 52 generally includes (i) a first housing 200 that is fixed either directly or indirectly to chassis 12 of combine 10 by fasteners 201 (heads not necessarily shown), (ii) a second housing 202 that is mounted either directly or indirectly to first housing 200 by fasteners 203; a motor 210 mounted to second housing 202 for powering fan 52; a (driven) driveshaft 208 that is non-rotatably mounted to an output shaft 214 of motor 210; a bearing 216 positioned between driveshaft 208 and second housing 202 to enable driveshaft 208 to rotate with respect to housing 202; and a spherical roller bearing 220 positioned between second housing 202 and first housing 200 that accommodates and compensates for angular misalignment (relative to axis 224) between driveshaft 208 and output shaft 214. Bearing 220 may also be said to compensate for angular misalignment (relative to axis 224) between the hubs 230 and 232 of housings 200 and 202, respectively.

Turning now to the individual components of the partial assembly of cleaning fan 52, driveshaft 208 has one end that is non-rotatably connected to output shaft 214 of motor 210 and an opposite end that is non-rotatably connected either directly or indirectly to impeller blades (see FIG. 1) of fan 52 for producing airflow along path 112.

First housing 200 includes a substantially rectangular body including a series of flanges on its exterior perimeter. Each flange includes an opening for receiving a fastener 201 or 203. As noted above, fasteners 201 mount first housing 200 either directly or indirectly to chassis 12 of combine 10, and fasteners 203 are used to mount second housing 202 to first housing 200. Fastener 203 is a bolt (for example) that is fixedly mounted to a female threaded fastener 231, and the female threaded fastener 231 is captivated to the first housing 200 by a rubber bushing 235. The rubber bushing 235, which is flexible, permits a limited degree of movement of fastener 203, as well as a limited degree of relative movement between the housings 200 and 202.

In operation, first housing 200 remains stationary along with second housing 202 and the housing of motor 210 which are each mounted either directly or indirectly to first housing 200. Stated differently, none of first housing 200, second housing 202 and the housing of motor 210 rotate, however, the output shaft 214 of motor 210 does rotate. First housing 200 includes an annular portion (or hub) 230 defining an interior diameter. The annular portion 230 of first housing 200 surrounds bearing 220. Bearing 220 is sandwiched between the annular portion 230 of first housing 200 and annular portion (or hub) 232 of second housing 202.

Second housing 202 also includes a substantially rectangular body including a series of flanges on its exterior perimeter. Each flange includes an opening for receiving a fastener 203. Fastener 203 mounts housings 200 and 202 together such that those housings are limited from rotating relative to one another (it is noted that bushing 235 does permit a very limited degree of rotation). Although not shown, a series of fasteners fixedly mount the housing of motor 210 to second housing 202 such that the motor housing is prevented from rotating relative to housings 200 and 202. Others means are known for mounting motor housing. Second housing 202 includes an annular portion (or hub) 232 that is surrounded by hub 230 of first housing 200. Hubs 232 and 230 overlap in the axial direction (i.e., along axis 224). The axial overlap results in a compact arrangement, which is beneficial from at least a space saving perspective.

Motor 210 includes a rotatable driving output shaft 214. Output shaft 214 may include axially-extending splines (as shown) that mesh with axially-extending splines formed in a recess at the end of the driveshaft 208. Accordingly, driveshaft 208 is driven to rotate about axis 224 by output shaft 214 of motor 210. Motor 210 may be an electric motor, or it may be powered by hydraulic or pneumatic power. Motor 210 may also be driven by a belt that is connected to a power take off (PTO) shaft that receives power from engine 32. It is noted that only a portion of motor 210 is shown in FIG. 3.

Bearing 216 is positioned in the annular space between drive shaft 208 and hub 232 of second housing 202. Bearing 216 enables rotation of drive shaft 208 relative to the stationary second housing 202. Bearing 216 may be a ball bearing, roller bearing and so forth. Bearing 216 may not necessarily compensate for any radial misalignment between output shaft 214 and driveshaft 208.

Bearing 220 is positioned in the annular space between stationary hub 230 of first housing 200 and stationary hub 232 of second housing 202. Bearing 220 compensates for angular misalignment (relative to axis 224) between driveshaft 208 and output shaft 214. Bearing 220 may be a spherical roller bearing. Alternatively, bearing 220 may be a self-aligning ball bearing, a spherical plain bearing, an angular contact bearing or any bearing that compensates for angular misalignment. Bearing 200 may also be a bushing, a rubber bushing or any other type of bushing. Like the hubs 230 and 232, the bearings 216 and 220 also overlap in the axial direction (i.e., along axis 224). As noted above, the axial overlap results in a compact arrangement, which is beneficial from at least a space saving perspective. Compensating for angular misalignment (e.g., +/- 5 degrees) results in a more robust connection between driveshaft 208 and output shaft 214 that will result in a longer lifespan for fan 52, as well as reduce noise, vibration and premature failure.

In summary, driveshaft 208 and output shaft 214 rotate, whereas, the housing of motor 210, first housing 200 and second housing 202 remain stationary. Bearing 216 is capable of movement to enable rotation of driveshaft 208 relative to hub 232. Bearing 220 is capable of movement to compensate for any angular misalignment between driveshaft 208 and output shaft 214 relative to axis 224.

Although the disclosure is illustrated and described herein with reference to specific embodiments, the disclosure is not intended to be limited to the details shown. Rather various modifications may be made in the details within the scope of the appended claims.

## Claims

1. A combine harvester comprising:
a chassis (12);
a cleaning fan assembly (52) that is connected to the chassis, wherein the cleaning fan assembly includes:
(a) a first housing (200) that is fixedly mounted to the chassis (12) or other point on the combine harvester, the first housing defining a first hub (230),
(b) a second housing (202) that is mounted to the first housing (200), the second housing (202) defining a second hub (232),
(c) a fan motor (210) that is fixedly mounted to the second housing (202), the fan motor (210) including a rotatable output shaft (214),
(d) a driveshaft (208) that is non-rotatably mounted to the rotatable output shaft (214) for rotating along with the output shaft (214),
(e) a first bearing (216) arranged between the second hub (232) and the driveshaft (208) for guiding rotation of the driveshaft (208) relative to the second hub (232), and **characterised in that** the cleaning fan assembly further includes
(f) a second bearing (220) arranged between the first hub (230) and the second hub (232), wherein the second hub (232) is circumferentially surrounded by the first hub (230) and wherein the second bearing (220) is configured to compensate for angular misalignment between the first hub (230) and the second hub (232).

2. The combine harvester of claim 1, wherein the first and second hubs (230, 232) overlap each other in an axial direction.

3. The combine harvester of claim 1 or claim 2, wherein the angular misalignment is relative to a longitudinal axis (224) of drive shaft (208).

4. The combine harvester of any one of the foregoing claims, wherein the second bearing (220) is one of a spherical roller bearing, a self-aligning ball bearing, spherical plain bearing, a bushing, a rubber bushing and an angular contact bearing.

5. The combine harvester of any one of the foregoing claims, wherein the first bearing (216) is not configured to compensate for angular misalignment between the first hub (230) and the second hub (232).

6. The combine harvester of any one of the foregoing claims, wherein the first bearing (216) is a ball bearing.

7. The combine harvester of any one of the foregoing claims, wherein one end of driveshaft (208) is non-rotatably connected to the output shaft (214) and an opposing end of driveshaft (208) is non-rotatably connected to an impeller of the cleaning fan assembly (52).

8. The combine harvester of claim 7, wherein the impeller of the cleaning fan assembly (52) is configured to deliver air along a flow path (112) that is perpendicular to a longitudinal axis of driveshaft (208).

9. The combine harvester of claim 8, further comprising a sieve (46, 48, 50) that is positioned in said flow path (112).

10. The combine harvester of any one of the foregoing claims, wherein the first housing (200) further comprises a first flange that is connected to a mating flange of the second housing (202) by a fastener (203) and flexible bushing (235).

11. The combine harvester of any one of the foregoing claims, wherein the first housing (200) further comprises a second flange that is connected to chassis (12) by a fastener (201).

12. The combine harvester of any one of the foregoing claims, wherein the second housing (202) further comprises a flange that is connected to a mating flange of the fan motor (210) by a fastener.

13. The combine harvester of any one of the foregoing claims, wherein the first and second bearings (216, 220) overlap each other in an axial direction.

14. The combine harvester of any one of the foregoing claims, wherein the second bearing (220) circumferentially surrounds the first bearing (216).

15. The combine harvester of any one of the foregoing claims, wherein the first and second bearings (216, 220), the first and second hubs (230, 232) and the output shaft (214) all overlap each other in an axial direction.

## Patentansprüche

1. Ein Mähdrescher, umfassend:
ein Fahrgestell (12);
eine Reinigungslüfteranordnung (52), die mit dem Chassis verbunden ist, worin die Reinigungslüfteranordnung umfasst:
(a) ein erstes Gehäuse (200), das fest an dem Fahrgestell (12) oder einem anderen Punkt an dem Mähdrescher montiert ist, wobei das erste Gehäuse eine erste Nabe (230) definiert,
(b) ein zweites Gehäuse (202), das an dem ersten Gehäuse (200) montiert ist, wobei das zweite Gehäuse (202) eine zweite Nabe (232) definiert,
(c) einen Lüftermotor (210), der fest an dem zweiten Gehäuse (202) montiert ist, wobei der Lüftermotor (210) eine drehbare Ausgangswelle (214) umfasst,
(d) eine Antriebswelle (208), die drehfest an der drehbaren Ausgangswelle (214) montiert ist, um sich zusammen mit der Ausgangswelle (214) zu drehen,
(e) ein erstes Lager (216), das zwischen der zweiten Nabe (232) und der Antriebswelle (208) angeordnet ist, um eine Drehung der Antriebswelle (208) relativ zu der zweiten Nabe (232) zu führen, und **dadurch gekennzeichnet, dass** die Reinigungsgebläseanordnung ferner umfasst
(f) ein zweites Lager (220), das zwischen der ersten Nabe (230) und der zweiten Nabe (232) angeordnet ist, worin die zweite Nabe (232) umlaufend von der ersten Nabe (230) umgeben ist und worin das zweite Lager (220) konfiguriert ist, um Winkelfehlausrichtung zwischen der ersten Nabe (230) und der zweiten Nabe (232) auszugleichen.

2. Der Mähdrescher nach Anspruch 1, worin sich die erste und zweite Nabe (230, 232) in einer axialen Richtung überlappen.

3. Der Mähdrescher nach Anspruch 1 oder Anspruch 2, worin die Winkelfehlausrichtung relativ zu einer Längsachse (224) der Antriebswelle (208) ist.

4. Der Mähdrescher nach einem der vorangehenden Ansprüche, worin das zweite Lager (220) eines von einem Pendelrollenlager, einem selbstausrichtenden Kugellager, einem Kugel-Gleitlager, einer Buchse, einer Gummibuchse und einem Schrägkugellager ist.

5. Der Mähdrescher nach einem der vorstehenden Ansprüche, worin das erste Lager (216) nicht dazu ausgelegt ist, eine Winkelfehlausrichtung zwischen der ersten Nabe (230) und der zweiten Nabe (232) auszugleichen.

6. Der Mähdrescher nach einem der vorangehenden Ansprüche, worin das erste Lager (216) ein Kugellager ist.

7. Der Mähdrescher nach einem der vorstehenden Ansprüche, worin ein Ende der Antriebswelle (208) drehfest mit der Ausgangswelle (214) verbunden ist und ein gegenüberliegendes Ende der Antriebswelle (208) drehfest mit einem Laufrad der Reinigungsgebläseanordnung (52) verbunden ist.

8. Der Mähdrescher nach Anspruch 7, worin das Laufrad der Reinigungsgebläseanordnung (52) konfiguriert ist, um Luft entlang eines Strömungswegs (112) zu liefern, der senkrecht zu einer Längsachse der Antriebswelle (208) ist.

9. Der Mähdrescher nach Anspruch 8, ferner umfassend ein Sieb (46, 48, 50), das in dem Strömungsweg (112) positioniert ist.

10. Der Mähdrescher nach einem der vorangehenden Ansprüche, worin das erste Gehäuse (200) ferner einen ersten Flansch umfasst, der mit einem passenden Flansch des zweiten Gehäuses (202) durch ein Befestigungselement (203) und eine flexible Buchse (235) verbunden ist.

11. Der Mähdrescher nach einem der vorstehenden Ansprüche, worin das erste Gehäuse (200) ferner einen zweiten Flansch umfasst, der durch ein Befestigungselement (201) mit dem Fahrgestell (12) verbunden ist.

12. Der Mähdrescher nach einem der vorstehenden Ansprüche, worin das zweite Gehäuse (202) ferner einen Flansch umfasst, der durch ein Befestigungselement mit einem passenden Flansch des Gebläsemotors (210) verbunden ist.

13. Der Mähdrescher nach einem der vorstehenden Ansprüche, worin sich die ersten und zweiten Lager (216, 220) in einer axialen Richtung überlappen.

14. Der Mähdrescher nach einem der vorangehenden Ansprüche, worin das zweite Lager (220) das erste Lager (216) umlaufend umgibt.

15. Der Mähdrescher nach einem der vorangehenden Ansprüche, worin sich die ersten und zweiten Lager (216, 220), die ersten und zweiten Naben (230, 232) und die Ausgangswelle (214) alle in axialer Richtung überlappen.

## Revendications

1. Moissonneuse-batteuse comprenant :
un châssis (12) ;
un ensemble ventilateur de nettoyage (52) qui est relié au châssis, dans laquelle l'ensemble ventilateur de nettoyage comporte :
(a) un premier boîtier (200) qui est monté de manière fixe sur le châssis (12) ou un autre point de la moissonneuse-batteuse, le premier boîtier définissant un premier moyeu (230),
(b) un second boîtier (202) qui est monté sur le premier boîtier (200), le second boîtier (202) définissant un second moyeu (232),
(c) un moteur de ventilateur (210) qui est monté de manière fixe sur le second boîtier (202), le moteur de ventilateur (210) comportant un arbre de sortie rotatif (214),
(d) un arbre de transmission (208) qui est monté de manière non rotative sur l'arbre de sortie rotatif (214) pour tourner avec l'arbre de sortie (214),
(e) un premier roulement (216) agencé entre le second moyeu (232) et l'arbre de transmission (208) pour guider la rotation de l'arbre de transmission (208) par rapport au second moyeu (232) et **caractérisée en ce que** l'ensemble ventilateur de nettoyage comporte en outre
(f) un second roulement (220) agencé entre le premier moyeu (230) et le second moyeu (232), dans laquelle le second moyeu (232) est entouré circonférentiellement par le premier moyeu (230) et dans laquelle le second palier (220) est conçu pour compenser le désalignement angulaire entre le premier moyeu (230) et le second moyeu (232).

2. Moissonneuse-batteuse selon la revendication 1, dans laquelle les premier et le second moyeux (230, 232) se chevauchent l'un l'autre dans une direction axiale.

3. Moissonneuse-batteuse selon la revendication 1 ou la revendication 2, dans laquelle le désalignement angulaire est relatif à un axe longitudinal (224) de l'arbre d'entraînement (208).

4. Moissonneuse-batteuse selon l'une quelconque des revendications précédentes, dans laquelle le second roulement (220) est l'un parmi un roulement à rotule sur rouleaux, un roulement à billes sur rotule, une rotule lisse, une douille, une douille en caoutchouc et un roulement à contact oblique.

5. Moissonneuse-batteuse selon l'une quelconque des revendications précédentes, dans laquelle le premier roulement (216) n'est pas conçu pour compenser le désalignement angulaire entre le premier moyeu (230) et le second moyeu (232).

6. Moissonneuse-batteuse selon l'une quelconque des revendications précédentes, dans laquelle le premier roulement (216) est un roulement à billes.

7. Moissonneuse-batteuse selon l'une quelconque des revendications précédentes, dans laquelle une extrémité de l'arbre de transmission (208) est reliée de manière non rotative à l'arbre de sortie (214) et une extrémité opposée de l'arbre de transmission (208) est reliée de manière non rotative à une roue de l'ensemble ventilateur de nettoyage (52).

8. Moissonneuse-batteuse selon la revendication 7, dans laquelle la roue de l'ensemble ventilateur de nettoyage (52) est conçue pour délivrer de l'air le long d'un chemin d'écoulement (112) qui est perpendiculaire à un axe longitudinal de l'arbre de transmission (208).

9. Moissonneuse-batteuse selon la revendication 8, comprenant en outre un tamis (46, 48, 50) qui est positionné dans ledit chemin d'écoulement (112).

10. Moissonneuse-batteuse selon l'une quelconque des revendications précédentes, dans laquelle le premier boîtier (200) comprend en outre une première bride qui est reliée à une bride d'accouplement du second boîtier (202) par une fixation (203) et une douille souple (235).

11. Moissonneuse-batteuse selon l'une quelconque des revendications précédentes, dans laquelle le premier boîtier (200) comprend en outre une seconde bride qui est reliée au châssis (12) par une fixation (201).

12. Moissonneuse-batteuse selon l'une quelconque des revendications précédentes, dans laquelle le second boîtier (202) comprend en outre une bride qui est reliée à une bride d'accouplement du moteur de ventilateur (210) par une fixation.

13. Moissonneuse-batteuse selon l'une quelconque des revendications précédentes, dans laquelle les premier et second roulements (216, 220) se chevauchent l'un l'autre dans une direction axiale.

14. Moissonneuse-batteuse selon l'une quelconque des revendications précédentes, dans laquelle le second roulement (220) entoure circonférentiellement le premier roulement (216).

15. Moissonneuse-batteuse selon l'une quelconque des revendications précédentes, dans laquelle les premier et second roulements (216, 220), les premier et second moyeux (230, 232) et l'arbre de sortie (214) se chevauchent tous dans une direction axiale.
